Europäisches Patentamt

European Patent Office

Office européen des brevets

(11) Numéro de publication: **0 325 517**
**A1**

# (12) DEMANDE DE BREVET EUROPEEN

(21) Numéro de dépôt: **89400110.6**

(22) Date de dépôt: **13.01.89**

(51) Int. Cl.⁴: **G 01 L 3/10**

(30) Priorité: **22.01.88 FR 8800684**

(43) Date de publication de la demande:
**26.07.89 Bulletin 89/30**

(84) Etats contractants désignés: **DE ES GB IT SE**

(71) Demandeur: **S.N.R. ROULEMENTS**
**Boîte Postale 17 1, rue des Usines**
**F-74010 Annecy Cédex (FR)**

(72) Inventeur: **Peilloud, Fernand**
**Hery S/Alby**
**F-74540 Alby s/Cheran (FR)**

(74) Mandataire: **Ernst-Schonberg, Michel et al**
**REGIE NATIONALE DES USINES RENAULT (S. 0267) 8 &**
**10, avenue Emile Zola**
**F-92109 Boulogne Billancourt Cédex (FR)**

(54) Dispositif de mesure d'un couple sur un arbre tournant.

(57) Dispositif de mesure d'un couple de torsion sur un arbre tournant (10, 12) du type comportant deux éléments codeurs (22, 20) de déplacement fixés en deux points axialement espacés de l'arbre sur lequel on mesure la modification de la position angulaire respective des points auxquels sont fixés les éléments codeurs et deux éléments capteurs (25, 24), caractérisé par le fait que les éléments capteurs (24, 25) sont solidaires d'un boîtier (14) fixe à paroi intérieure délimitant avec l'arbre (10, 12) le logement de deux paliers (30, 31) à corps roulants dont les chemins de roulement sont associés à un élément porte-codeur (23, 21).

Figure 1

EP 0 325 517 A1

Bundesdruckerei Berlin

**Description**

## DISPOSITIF DE MESURE D'UN COUPLE SUR UN ARBRE TOURNANT

L'invention se rapporte aux dispositifs de mesure d'un couple sur un arbre tournant du type comportant deux éléments codeurs fixés en deux points axialement espacés sur l'arbre permettant la mesure du déphasage angulaire des sections droites de l'arbre passant respectivement par lesdits points, des éléments capteurs sensibles au passage d'éléments codeurs délivrant un signal de sortie dont le traitement prend la forme d'un signal proportionnel au couple. L'invention concerne également un dispositif de mesure de la puissance transmise par ledit arbre.

La publication GB.A.2050 623 décrit un dispositif de mesure de couple à deux roues dentées coplanaires dont l'une est rapportée sur un manchon axialement décalé par rapport à l'autre roue et qui possèdent des dentures imbriquées en déplacement devant un capteur qui délivre des signaux variables en fonction de la vitesse de l'arbre et du décalage des dentures.

L'invention se propose d'améliorer sensiblement la précision de mesure, tout en réduisant la complexité de réalisation du dispositif au moyen d'un ensemble de deux paliers ou roulements à capteur d'information tels que décrit dans les publications FR-A-2558223 et 2599794.

Ces publications décrivent des paliers ou roulements comportant une bague fixe portant un dispositif capteur et une bague tournante portant un élément codeur.

Le dispositif capteur peut être par exemple une sonde à effet Hall ou une magnétorésistance, l'élément codeur étant un aimant multipôles.

Au cours d'une rotation de la baque tournante, le capteur délivre un signal électrique dont la fréquence est proportionnelle à la vitesse de rotation de cette bague. De la même façon, le signal délivré permet la détection de la position angulaire de l'élément tournant.

Selon l'invention, les capteurs sont solidaires d'un boîtier fixe à paroi intérieure délimitant avec l'arbre le logement de deux paliers à corps roulants dont les chemins de roulement sont associés à un élément porte-codeur.

La mesure du déphasage entre les signaux électriques émis alternativement par l'un et l'autre capteur permet de calculer le couple de torsion de l'arbre et si besoin est par utilisation de l'information de vitesse de rotation délivrée par l'un ou l'autre des capteurs, de calculer la puissance transmise par cet arbre.

D'autres caractéristiques et avantages de l'invention apparaîtront à la lecture de la description d'exemples de réalisations de celle-ci faite en référence aux dessins annexés dans lesquels :

la figure 1 est un exemple d'application du dispositif à un arbre tournant muni d'une liaison élastique constituée d'un arbre de torsion

la figure 2 est une représentation des tensions délivrées par chacun des éléments capteurs en fonction du temps pour différents états de torsion de l'arbre au cours de sa rotation

la figure 3 est une représentation des tensions délivrées par chacun des capteurs en fonction du temps correspondant à un agencement particulier des éléments codeurs

La figure 4 est un exemple d'application du dispositif à un arbre tournant muni d'une liaison élastique constituée d'un matériau type élastomère.

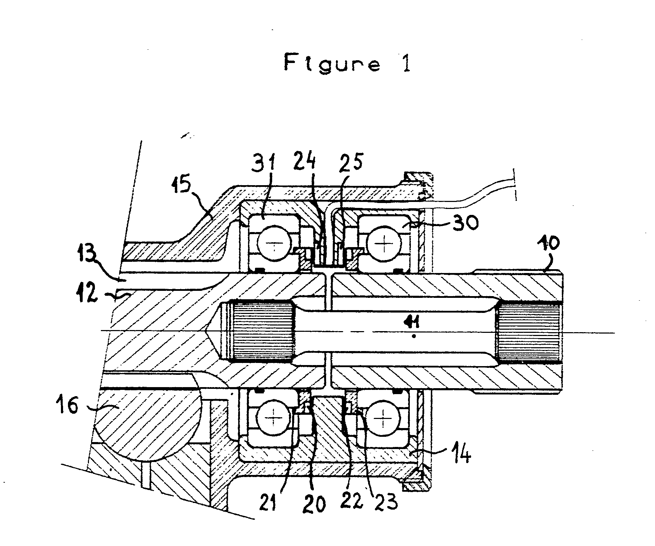

Selon la figure 1, un tronçon d'arbre 10 est solidaire d'un tronçon d'arbre 12 au moyen d'une liaison élastique-déformable constituée par une barre de torsion 11 . Le tronçon 10 designé par convention arbre d'entrée, est relié à l'organe moteur du dispositif. Le tronçon 12 désigné par convention arbre de sortie, comporte à titre d'exemple, une denture de pignon 13 en prise avec une crémaillère 16 qui constitue l'organe récepteur du dispositif. La barre de torsion 11 disposée coaxialement et concentriquement aux tronçons 10 et 12 permet la transmission du mouvement de rotation des dits tronçons d'arbre avec déformation en torsion de la barre de torsion.

Des paliers 30 et 31 identiques, respectivement montés serrés sur les arbres d'entrée 10 et de sortie 12 sont constitués par des roulements à billes dont les bagues intérieures portent solidairement des codeurs 22 et 20 montés sur des supports 23 et 21. Les bagues extérieures des roulements 30 et 31 sont montées dans un boîtier 14 à paroi intérieure cylindrique qui assure en outre le maintien des éléments capteurs 25 et 24 qui constituent en combinaison avec les éléments codeurs 22 et 20 respectivement deux organes de mesure tachymétriques à caractéristiques identiques.

Le boîtier 14 est agencé pour contenir éventuellement les organes de traitement des informations délivrées par les éléments capteurs 24 et 25 . Il comporte également un orifice radial en communication avec une rainure longitudinale qui s'étend axialement à la surface externe du boîtier 14 de façon à permettre le passage de conducteurs de signaux.

Le boîtier 14 est par ailleurs immobilisé axialement dans un carter 15 par tout moyen conventionnel.

En référence à la figure 2, le diagramme 2a représente une répartition des signaux délivrés par le capteur 25 en fonction du temps au cours de la rotation de l'élément codeur 22 . La période P du signal électrique est représentative de la vitesse de rotation de l'élément codeur 22 et de l'arbre d'entrée 10 .

Le diagramme 2b illustre une répartition des signaux délivrés par le capteur 24 en fonction du temps au cours de la rotation de l'élément codeur 20 et de l'arbre de sortie 12.

Lorsque ces dispositifs tachymétriques sont correctement montés les signaux émis des capteurs 24 et 25 sont en phase.

Lorsqu'un couple de torsion est appliqué entre l'arbre d'entrée 10 et l'arbre de sortie 12 par l'intermédiaire de la barre de torsion 11 , la déformation de cette dernière provoque un retard de rotation de l'élément codeur 20 par rapport à l'élément codeur 22 et un déphasage des signaux délivrés par le capteur 24 par rapport à ceux délivrés par le capteur 25 tel que représenté sur le diagramme 2c. L'état de torsion de la barre de torsion 11 est donné par la grandeur $\triangle$ P1 mesuré par chronométrage des temps de déphasage entre les signaux délivrés par le dispositif tachymétrique (20, 24) et ceux délivrés par le dispositif tachymétrique (22, 25).

Le diagramme 2d illustre une répartition des signaux délivrés par le capteur 24 lorsque la barre 11 est sollicitée en torsion avec une amplitude de déformation angulaire supérieure à la période P. L'état de torsion de la barre de torsion 11 est donné par la grandeur $\triangle$ P2 mesuré soit par chronométrage tel que décrite préce demment, soit par mesure du glissement exprimé par le nombre entier de périodes ayant glissé depuis l'etat initial de référence dans lequel l'arbre 11 n'était pas sollicité en torsion.

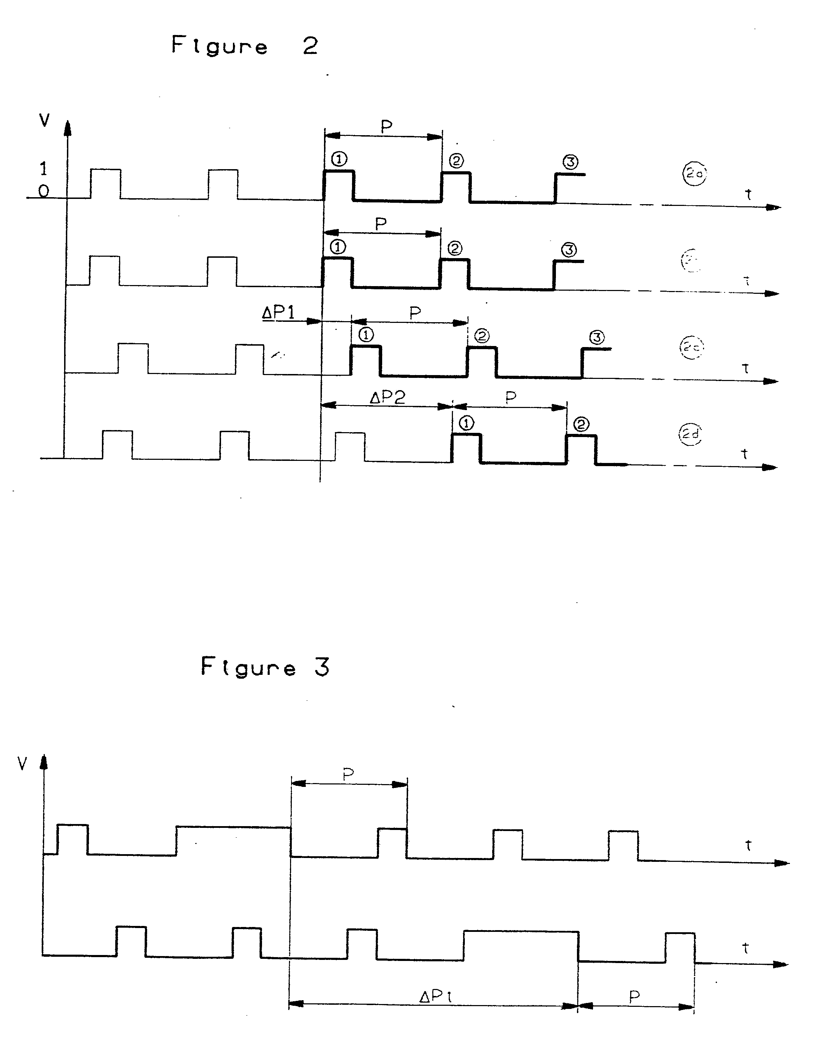

Lorsque la déformation en torsion est de grande amplitude et afin de matérialiser un signal de référence, on prévoit avantageusement sur les éléments codeurs 20 et 22 un codage spécial générant un sortie des capteurs 24 et 25 et une seule fois par révolution des codeurs, un signal électrique de période différente tel que représente sur les diagrammes de la figure 3.

Le couple transmis est donné par la relation :

$$C = K_1\ \theta$$

dans laquelle $K_1$ est une constante dont la valeur dépend du module d'élasticité transversal du matériau, de la rigidité en torsion et de la distance entre les points d'ancrage de la barre de torsion 11 sur les arbres d'entrée 10 et de sortie 12. $\theta$ est l'angle de torsion entre les codeurs 20 et 22.

L'angle de torsion est donné par la relation :

$$\theta\ =\ K_2\ \frac{\triangle Fi}{P}$$

dans laquelle :

. Pi est le déphasage mesuré en unité de temps des signau émis par le capteur 24 tel que représenté sur les diagrammes 2c ou 2d

. P est la période mesuré en unité de temps des signaux émis par l'un ou l'autre des capteurs 24 et 25

. $K_2$ est une constante dépendant des caractéristiques des codeurs 20 et 22 et notamment de leur nombre de secteur magnétiques

Dans ces conditions :

$$C\ =\ K_1\ .\ K_2\ \frac{\triangle Fi}{P}$$

La constante $K_1 \cdot K_2$ peut être soit calculée soit mesurée.

Les grandeurs $\triangle$ Pi et P sont délivrées par les dispositifs tachymétriques (20, 24) et( 22, 25).

Le couple C peut être calculé par un microprocesseur à partir des grandeurs précédemment citées.

Par ailleurs, on sait que Pu = C$\omega$ dans laquelle : Pu est la puissance transmise par l'arbre.

Or, la vitesse de l'arbre mesuré par l'un ou l'autre des dispositifs tachymétriques (20, 24) et (22, 25) est de la forme :

$\omega = K_3\ \frac{1}{P}$ $K_3$ étant une constante dépendant des capteurs et de l'unité dans laquelle est exprimée la puissance.

Donc

$$Pu\ =\ K_1\ \times\ K_2\ \times\ K_3\ \frac{\triangle Fi}{P^2}$$

Ce calcul peut être avantageusement effectué par un micropro cesseur.

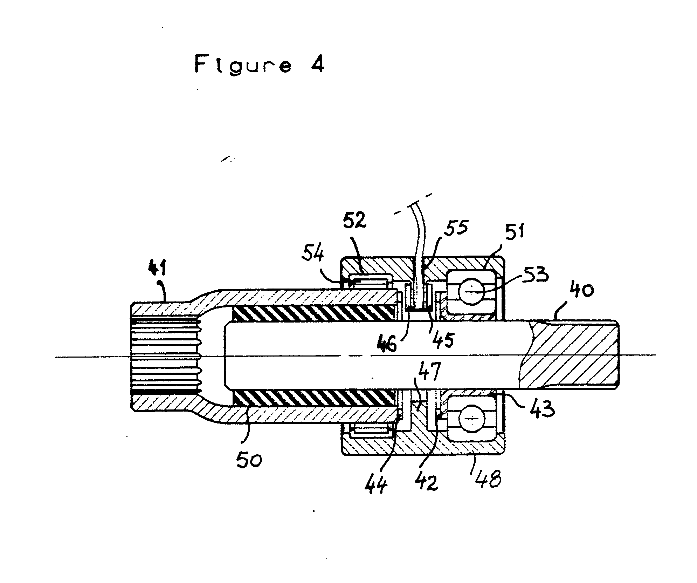

La figure 4 illustre un autre exemple de mise en oeuvre du dispositif dans lequel un arbre 40 est rendu solidaire d'une douille 41 au moyen d'une liaison élastique déformable 50.

La liaison 50 est constituée à titre d'exemple par un matériau élastomère adhérisé à l'arbre 40 et à la douille 41 disposés coaxialement et concentriquement l'un par rapport à l'autre dans le but de permettre la transmission du mouvement de rotation des éléments 40 41 sans glissement.

L'arbre 40 et la douille 41 portent respectivement à leurs extrémités des moyens de liaison (cannelures) pour assurer la transmission du couple entre un organe moteur et un organe récepteur non représentés.

Un premier élément codeur 42 de déplacements angulaires est monté sur le flanc radial d'une douille 43 solidaire de l'arbre 40.

Un deuxième élément codeur 44 est monté à extrémité de la douille 41.

Des éléments capteurs 45, 46 respectivement portés par les faces opposées d'une collerette 47 d'un boîtier 48 constituent en combinaison avec les éléments codeurs 42, 44 deux organes de mesure tachymétriques.

Le boîtier 48 à paroi intérieure cylindrique délimite avec l'arbre 40 et la douille 41 , le logement 49 de deux paliers 51, 52 à corps roulants (billes 53 et rouleaux 54).

Aux chemins de roulement des corps roulants respectivement portés par les douilles 43 ou 41 sont associés des organes porteurs des éléments codeurs 42 , 44.

Lorsque l'arbre 40 , la douille 41 et la liaison 50 tournent à vitesse constante sans qu'aucun couple de torsion ne soit appliqué entre l'arbre 40 et la douille 41 , les capteurs 45 , 46 délivrent des signaux périodiques de même fréquence proportionnelle à la vitesse de rotation.

Les signaux délivrés sont simultanés sous réserve d'un montage correct des capteurs et des codeurs.

Lorsqu'un couple de torsion est appliqué entre l'arbre 40 et la douille 41 ; la liaison 50 se déforme élastiquement et engendre un retard de rotation de l'élément codeur 44 par rapport à l'élément codeur 42 , et un déphasage des signaux délivrés par le capteur 46 par rapport à ceux délivrés par le capteur 45.

La valeur de déphasage est une fonction de la déformation de la liaison élastique 50 et de la valeur du couple de torsion. Aux capteurs 45 , 46 sont branchés des conducteurs électriques par un passage radial 55 au travers du boîtier 48.

Dans le dispositif ainsi réalisé, l'arbre 40 et la douille 41 sont efficacement supportés au cours de leur rotation par les paliers 51 , 52 . Le palier 51 à billes 53 , retenu axialement dans le boîtier 48 , est emmanché à force sur l'arbre 40 par l'intermédiaire de la douille 43 porte-codeur et permet le maintien précis des positions relatives du codeur 42 par rapport au capteur 45 et la position du boîtier 48 avec son capteur 46 par rapport à la douille 41 porteuse du codeur 43 .

Un autre avantage du dispositif réside dans le fait que les capteurs 45 , 46 délivrent des signaux dans un système fixe lié au boîtier 48 . Ce système peut donc contenir les organes de traitement des informations sans nécessiter une transmission d'information par contact tournant.

Sans sortir du cadre de l'invention, il est, bien évident que le dispositif capteur peut être de tout type connu. De même, l'invention n'est nullement limitée au mode de réalisation décrit et représenté, donné à titre d'exemple.

En particulier, elle englobe les moyens équivalents techniques des moyens décrits ou leurs combinaisons si celles-ci sont réalisées dans l'esprit de l'invention ou mises en oeuvre dans le cadre d'une mesure de couple et de puissance transmise par un arbre tournant.

**Revendications**

1. Dispositif de mesure d'un couple de torsion sur un arbre tournant (10, 12 ; 40, 41) du type comportant deux éléments codeurs (22, 20 ; 42, 44) de déplacement fixés en deux points axialement espacés de l'arbre sur lequel on mesure la modification de la position angulaire respective des points auxquels sont fixés les éléments codeurs et deux éléments capteurs (25, 24 ; 45, 46) caractérisé par le fait que les éléments capteurs (24, 25 ; 45, 46) sont solidaires d'un boîtier (14 ; 48) fixe à paroi intérieure délimitant avec l'arbre (10, 12 ; 40, 41) le logement de deux paliers (30, 31 ; 51, 52) à corps roulants dont les chemins de roulement sont associés à un élément porte-codeur (23, 21 ; 43).

2. Dispositif selon la revendication 1, caractérisé par le fait que les éléments (10,12 ; 40, 41) de l'arbre tournant sont disposés coaxialement dans le boîtier fixe (14 ; 48) et sont accouplés l'un à l'autre par un moyen de liaison (11 ; 50) élastiquement déformable.

3. Dispositif selon la revendication 2, caractérisé par le fait que les éléments (40, 41) de l'arbre tournant sont concentriques.

4. Dispositif selon l'une quelconque des revendications 1 à 3, caractérisé par le fait que le boîtier (14 ; 48 ) porteur des capteurs (24, 25 ; 45, 46) assure le guidage des conducteurs des signaux de mesure.

Figure 1

# Figure 2

# Figure 3

Figure 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,Y | EP-A-0 250 275 (S.N.R. ROULEMENTS) * Résumé; figures * | 1 | G 01 L 3/10 |
| D,Y | FR-A-2 558 223 (S.N.R.) * Résumé; figures * | 1 | |
| Y | FR-A-2 196 691 (TEXACO DEVELOPMENT CORP.) * Figure 2 * | 1-4 | |
| Y | EP-A-0 151 089 (VIBRO-METER S.A.) * Résumé; figure 2 * | 1-4 | |
| Y | DE-A-3 307 105 (R. BOSCH GmbH) * Résumé; figure 1 * | 1-4 | |
| Y | US-A-2 754 683 (C.C. WAUGH) * Figure 1 * | 1-4 | |

**DOMAINES TECHNIQUES RECHERCHES (Int. Cl.4)**

G 01 L 3

Le présent rapport a été établi pour toutes les revendications

| Lieu de la recherche | Date d'achèvement de la recherche | Examinateur |
|---|---|---|
| LA HAYE | 18-04-1989 | VAN ASSCHE P.O. |